# EUROPEAN PATENT APPLICATION

(11) **EP 3 107 013 A1**
(43) Date of publication of application: **21.12.2016**
(21) Application number: 16174139.2
(22) Date of filing: 13.06.2016
(51) Int. Cl.: G06F 17/30, G06Q 10/00

(54) **SORTING PROCESS OF JOURNALISTIC ARTICLES**

(30) Priority: 15.06.2015 IT UB20151397
(71) Applicant: Blasting S.A.G.L., 8630 Chiasso (CH)
(72) Inventor: MANFREDI, Andrea, 22100 Como (IT)
(74) Representative: Lunati & Mazzoni S.r.L.

(57) **Abstract**

Herein a sorting process of journalistic articles as a function of website feeds is envisaged; each feed comprises a piece of journalistic information comprising a text section; the sorting process comprises a computer unit comprising a database of journalistic articles and a noise database comprising disturbance words; a server comprising the feeds; and a reading step in which the computer unit is linked in data connection with the server, reads a text section of journalistic information that is present in each of said feeds; an identifying step in which the computer unit extracts, from each of the read text sections, a part of the text deprived of disturbance words; a text analysis step in which, in the part of the text, the computer unit identifies strings and associates to each of the strings a weight as a function of the position of the string in the text section comprising the string, and of the number of times the string is present in the feeds; and a choosing step in which said computer unit classifies and selects said journalistic articles based on a score as a function of said weight and of the number of times said strings are present in said journalistic article.

## Description

The object of the present invention is the sorting process of journalistic articles of the kind outlined in the preamble of the first claim.

In particular, the here described invention relates to a particular process that, through research and identification of information of higher interest, identifies news items to be published in a newspaper and, preferably, an online newspaper or other news site.

As is known, the research and identification of information of higher interest is one of the most relevant aspects of the productive process of a newspaper because it defines, in part at least, which news items are worth (or not) writing an article about and which articles should be published on the front page, which on the second page and which should not be published at all.

In order to tackle this task, editorial staff designate part of their staff to the constant monitoring of various information channels, in the attempt to collect either new and original arguments or information trends that generate the most interest among the public.

In particular, this staff, beside focussing on national agencies for information, also monitor social networking sites.

It should be pointed out that monitoring of social networking services is growing in importance since its users, through sharing of digital information, represent a source of information in almost real time.

A demonstration of this importance is to think that when, for example, an earthquake happens, those at the scene publish posts with comments and photos on their profiles; other users comment and share these posts, exhibiting their interest for this event and, above all, increasing the distribution and drawing public attention towards this event/news item.

In addition, posts, apart from being an indicator of interest about an event, provide information in real time and thus act as a source of primary importance. The importance of these networking sites is increased further by the fact that almost all politicians, athletes, singers and other persons of public interest usually post comments and declarations of notable journalistic interest on their own profiles.

The above-mentioned state of the art brings with it some notable disadvantages.

A first important disadvantage is the fact that the above-described process particularly requires time and effort due to the ever-increasing number of sites or other sources from which information of high public interest is taken.

This aspect is highlighted further by the increased usage of social networking services which has, in turn, rendered research more complex and time-consuming.

Another disadvantage lies in the fact that the slow speed of the research can lead to a delay in the publication of an article in comparison to competing newspapers, hence having a penalising outcome for the newspaper.

A further disadvantage lies in the fact that, oftentimes, journalists write articles on things of little public interest which are never going to be published. Another big disadvantage can be identified by the fact that a newspaper is obliged to use part of its staff to only carry out this research and, thus, identify items of interests about which to write an article.

In this situation, the technical task underlying this invention is to design a sorting process of journalistic articles that is capable of fundamentally solving the above-mentioned disadvantages.

In the scope of said technical task, an important objective of the invention is to design a process that satisfies the need for a dynamic and quick-paced organization of a newspaper.

One aim that should be achieved with the present invention is to define a process which, in almost real time, is capable of obtaining information of higher interest.

One objective of the invention in particular is to define a process which is capable of rapidly updating the various methods of organising articles depending on the information that is of interest, and, thus, which is capable of producing the best possible response to the changing nature of information of interest.

Another important objective of the invention is to define a process which, by putting information of higher importance at the top, allows the reader to quickly identify news that are of interest to him/her.

One further objective of the invention is to define a process which allows to optimize staff and, thus, reduce the cost of running a journalistic newsroom. The technical task and the outlined objectives are achieved through a sorting process of journalistic articles as claimed in Claim 1 appended here.

Preferred embodiments are outlined in the dependent claims.

Unless specified otherwise, as results from the following discussions, in the discussions that use terms such as "processing", "information technology", "calculation", "determination" or similar expressions, these are considered to refer to the action and/or processes of a computer or of a calculating system, or of a similar electronic calculating device, manipulating and/or transforming represented data, whether physical or electronical, register quantities of the information system and/or memories into other data that are similarly represented as physical quantities within computer systems, registers or other information storage, transmission or visualisation devices.

The sorting process of journalistic articles helps to identify information of higher public interest and, thus, to determine the order in which articles appear in a newspaper and, particularly, in an online newspaper.

In addition, because it identifies information of higher public interest, the process can be used to identify topics on which it is worth writing one or more journalistic articles to be published on the website.

The sorting process of journalistic articles uses website content in an innovative manner.

In particular, websites can be either of a journalistic nature, such as those of daily newspapers, radio and television broadcasters or of public information entities.

Alternatively, the websites can be those of social networking services and, when considered more in detail, sites of which each identifies the profile of a politician, a TV personality, an athlete or another person of public interest.

In another alternative, the websites can be either journalistic websites or website profiles of related social networking services.

Preferably, the process uses feeds of one or more pages of those websites. The term "feed" (also known as web feed) stands for an information unit formatted according to certain specifications, preferably of XML generation, previously defined. This formatting step is carried out in order to ensure that content can be used and exchanged across various applications or platforms. Types of feeds that can be used are Atom (and in particular Atom Syndication Format and/or Atom Publishing Protocol in particular) and RSS (acronym denoting RDF Site Summary and often referred to as Really Simple Syndication or Rich Site Summary).

Every feed contains one or more pieces of journalistic information and, for each piece of information, loading date of the same, showing the day and, preferably, the hour in which the piece of information has been added to the feed and, thus, has been published.

The expression "journalistic information" stands for web content that carries a news item of possible interest. It is therefore identifiable in a journalistic service that is published on a journalistic website and/or a declaration of a person of public interest posted on a social networking site.

It should be pointed out that every feed comprises several pieces of journalistic information relating to one single information sector, such as politics, economy, news, sport. An alternative is a feed comprising journalistic information relating to several information sectors. Another alternative is a feed comprising one single piece of journalistic information.

Each piece of journalistic information comprises at least one text section which is made up of one or more terms.

In particular, a piece of information comprises a title that identifies a text section presenting the news items contained within the piece of information. In addition, the information can comprise at least one of the following: a summary identifying a different text section summarizing the contents of the journalistic information; or a description identifying an additional portion that presents the journalistic information in its entirety.

It should be pointed out that, within the feeds, the parts of journalistic information are reciprocally distinguished and identified by a marker called tag. This tag is univocal of the specific part of the piece of information and thus allows to automatically determine whether the therein contained text is a title, a summary or a description.

The sorting process of journalistic articles consists of and, for accuracy, is apt to be carried out via a computer unit and a server.

The server comprises the feeds relating to the above-mentioned websites, that is to one or more pages of journalistic websites and/or online profiles on social networking sites about a person of public interest.

The computer unit comprises of a processor apt to control the unit and, specifically, to process and analyse said feeds; a memory; and connection tools, such as an antenna, apt to carry out a data exchange between the computer unit and the server; a battery or another power supply means for the computer unit; and, optionally, a time measuring unit apt to provide the computer unit with information about the current date, including the day and, more in detail, the time.

The memory comprises a journalistic database and a noise database.

The journalistic database comprises journalistic articles apt to be published on a website or a printed newspaper.

The noise database comprises disturbance words, i.e. conjunctions, articles and other terms that would disturb the following analysis and that are, usually, referred to as stop words.

Apart from that, the memory comprises a source index comprising a source list of at least one feed of said websites. Optionally, the memory and, subsequently, the unit, comprise several source indices, each one comprising the feeds relative to one of more information sectors.

The sorting process of journalistic articles comprises a reading step of at least one text section of each journalistic information found in the feeds of at least one source index; an identification step in which the computer unit extracts, from each read section, at least one part of the text without the disturbance words; a textual analysis step in which the unit identifies the strings that are present in the identified part of the text and associates to each string a weight as a function of the length of the section from which the string has been extracted and of the amount of times that string is present in the feeds; and a choosing step in which the computer unit classifies and selects the journalistic articles based on a score which is a function of at least the weight and number of presences of said strings in the journalistic article.

In the reading step, the computer unit is linked in data connection with the server and reads one or more text sections of the journalistic information present in each feed of at least one source index.

In particular, the computer unit reads at least the title. More particularly, the computer unit, besides the title, reads at least one out of summary and description. Still more preferably, the computer unit reads title, summary and description.

Preferably, reading of the pieces of information follows a reading order defined by the same unit depending on the loading date of each journalistic information present in the various feeds.

The reading order in particular is so that the first journalistic information to be read is also the most recent, that means having a loading date which is closer to the current date.

The journalistic information that is read forms at least part of that information present in a feed. The journalistic information that is read is, in particular, everything that is present in the feeds of the source index.

Alternatively, the information that is read is that for which the delta between current date and their own loading date is below a predefined time threshold. Another alternative is that it reads an amount of journalistic information that is substantially below a predefined numeric threshold.

It should be pointed out that this step, and the following steps, preferably, are carried out by consulting the feeds directly online from the computer unit and, thus, without same unit having to download them from the server onto its own memory.

Once the reading step is finished, the computer unit carries out the following steps, particularly the choosing step, automatically, i.e. without the need for a further command/intervention by an operator.

In this step, the unit extracts from each sector that is read the texts, identifies the terms that make up these texts based on separators (e.g. a free space or symbols such as /, &, -, _) that reciprocally divide these said terms, and skims the terms while erasing those that correspond to disturbance words.

Once the terms present in every section have been singled out, the analysis step is carried out, in which the unit does the following for each text section that is read: assigning a value to single terms, identifying one or more strings of terms; associating a weight as a function of said value to each string; and regrouping the strings identified in the feeds.

The value of a term is at least a function of a position parameter of the same term within the text section. Preferably, the greater the position parameter and, thus, the value, the closer the position of the term, defined based on the reading direction, will be to the beginning of the text section. Therefore, the first term that is read has a higher position parameter and, thus, a higher value compared to the second which, in turn, will be higher than the third.

Preferably, the position parameter of a term cannot be lower than a predefined position parameter threshold, conveniently equal to 1.

In addition to its position in a text section, the value of a term is defined based on a ranking parameter which depends on the reading order of the journalistic information, preferably proportional and, more preferably, directly proportional to the reading order.

Consequently, a term present in a section of the first information has a ranking parameter and, thus, a value, that is higher than a term identified in a section of the second information in the same feed.

More to the point, the value of a term is a function of at least one out of the length parameter which varies based on the length of the text section, conveniently defined by the number of terms contained in the section; and a section parameter, depending on the type of text section comprising the string. Ideally, it is a function of the length and section parameters.

In the first case, the value of a term is proportional, preferably inversely, to the number of terms making up the text section.

In the second case, the section parameter and, thus, the value of a term is based on the type of text section in which it is present. To be more precise, if the term appears in the title, its value will be higher than if it appears in the summary which, in turn, will be higher than if the term appears in the description.

Summing up, the computer unit obtains, upon the completion of the value assignment, for each analysed text section, one or more terms, each of which is associated to a function value of the position parameter, preferably of the ranking parameter; and, more preferably, of at least one out of length parameter and section parameter.

At this point, the computer unit defines, for each text section, at least one verbal string comprising at least one term and an evaluation associated with each string and determined as a function of the value of the terms making up said string.

In particular, the computer unit identifies in each section one or more first strings made up of singular terms and, conveniently, at least one complex string comprising more adjacent terms. Preferably, the unit identifies a plurality of first strings, at least one second string made up of two adjacent terms; and, conveniently, at least one third string made up of three adjacent terms.

It should be pointed out that two or more terms are adjacent to each other if, once the elimination of disturbance words completed, the text section does not present terms inserted between the terms which make up a complex string.

It should be pointed out that, hence, at the end of this operation, a string can be identified several times, either within one text section or in various text sections and can present, each time, a different evaluation.

The computer unit associates a function evaluation of values of the single terms that make up said string to each string in a section. Preferably, the evaluation of a string is substantially equal to that defined by the sum of the values of the single terms making up the string.

Once the identification and evaluation of the strings comprising each section is completed, the computer unit carries out the regrouping of the identified strings in all sections that have been read, in order to regroup the strings made up of the same terms, therefore avoiding the appearance of "duplicate" strings in the examined feeds, that is the presence of several strings that are equal to one another.

This regrouping is carried out by associating to each a weight as a function of the evaluation of the strings present in the various sections.

To clarify, it should be mentioned here that the expression "evaluation" identifies a number associated with each string present in a verbal section (there can thus be strings made up of the same terms and, in some cases, having different associated evaluations); while the expression "weight" identifies the value a string takes in the read feeds (in this case there will not be different strings made up of the same terms).

In particular, the computer unit, while comparing the terms making up the strings, identifies and regroups the strings made up of the same terms, associating with them a weight as a function of the evaluation of the single strings and, conveniently, of the number of times the string is present in the feed. Preferably, the weight of a string is calculated as a function of each position of said string within each read text section and, more preferably, substantially equal to the sum of the evaluations of the single strings.

It should be pointed out that, at the end of this operation, the computer unit obtains a list of the strings present in all of the read feeds and to which a weight as a function of the number of times that the string appears in the feed is associated; of the position of the string within each section; preferably of the order in which the information containing the section and, thus, the string was read; and of at least one out of the length of the text section and the type of text section comprising the string.

When the weight assignment to all of the strings is completed, the analysis step is finished and the process can schedule, before the choosing step, a step of string selection.

In this selection step, the computer unit compares the weights of the first verbal strings with the weight of at least one complex string and, in particular, with the weight of the second verbal string and, if present, of at least one third verbal string, in order to discard those of low weight.

To be precise, the computer unit identifies for each complex string, i.e. for each second and third string, each bundle of strings whose terms make up the terms of the complex string; calculates the total weight of the weights of the strings making up the complex string. So, if the total weight is greater or equal to the weight of the complex string, the complex string is eliminated from the list; if the total weight is lower than the weight of the complex string, the strings making up the complex string are eliminated from the list.

The selection step is conveniently completed by placing the string in a specific list, by weight in decreasing order. Optionally, this listing comprises only fundamentally the first 100 and, more in detail, the first 25 strings.

Once the optional selection step is concluded, the computer unit executes the choosing step.

In this step, the unit classifies and chooses the journalistic articles in the journalistic database according to a score which is a function of the weight and number of times the strings are present in the journalistic article.

In particular, the computer unit compares the list with the text of each article present in the journalistic database; identifies the number of times each string is present; and calculates the score of the articles by adding up the products between the weight and the number of times each string is present.

Based on the score, the computer unit compiles a classification, preferably arranged by score in decreasing order, of the journalistic articles.

Based on such a classification, the unit selects the articles based on said classification.

Once the selection is concluded, the sorting process of journalistic articles includes a video-making step in which the computer unit turns the chosen articles into videos, concealing, as a consequence, the others; and optionally, an orienteering step in which, while turning the arranged list into video based on the weight of said strings, the computer unit highlights the primary contents.

At the end of the video-making step, the sorting process includes a reboot step in which the computer unit, once a certain waiting time has passed, repeats the procedure by recommencing the reading step.

The waiting time, which is detected through the time measuring unit, lies substantially between 10 and 60 minutes and, in particular, between 15 and 30 minutes and, preferably, substantially equal to 20 minutes.

The invention yields important advantages.

A first important advantage lies in the fact that the process, by carrying out a text analysis (preferably of journalistic information produced/published by third parties), is capable of determining the most relevant strings, i.e. keywords, in a given moment in time and, thus, of classifying appropriate journalistic articles on the basis of these strings, i.e. on the basis of their importance and/or interest of the content of the journalistic information that is produced/published by third parties.

An important advantage is that the process turns out to be particularly fast and, because it is carried out automatically by the computer unit, simple, irrespective of the number of sources and, thus, of feeds from which the information of higher public interest is to be taken.

This aspect becomes particularly obvious when a single title of a piece of information is analysed, since the limited number of terms allows to ultimately speed up the process.

Another advantage is given by the fact that the particular weighing method of the strings allows to prevent an association of a wrong weight to a string, falsifying the identification of the relevant information and, thus, the selection of articles.

This advantage has innovatively been obtained by having a weight as a function of the length of the text section comprising the string.

This choice allows to give more weight to the strings of a title compared to those in another text section and, in particular, to maximise the weight of the title which, as has been stated, represents a thorough summary of the journalistic news item or of a declaration by a politician, an athlete, a TV personality or another person of public interest.

This weighing is ultimately improved thanks to the association of a weight as a function of the position of a string within one section; of the order in which the information comprising the string is read; of the length of the text section; and of the type of text section comprising the string.

Another advantage is given by the fact that the optimal weighing of the strings allows to choose and, thus, to publish articles of noteworthy relevance with items of higher interest.

This aspect thus ensures that the newspaper is always up-to-date, geared towards news items of higher reader attraction and, thus, of high interest for the public.

Another advantage lies in the fact that the high speed of the process and, in addition, the possibility of repeating the process at regular intervals, allow a near instantaneous identification of a new event.

One last advantage can be seen in the fact that the speed of identification of information of interest and, more precisely, the possibility to show to journalists a sorted list of strings of higher weight, helps in pointing journalists towards items of interest and, thus, avoiding articles about items that are of little public interest.

Therefore, another important advantage can, thus, be identified in the fact that the process allows for an optimisation of the use of the agency, thus reducing the cost of running a newspaper.

The invention is capable of accepting modifications falling within the scope of the inventive concept described in the independent claims and the relative technical equivalents. Within this scope, all details can be replaced by equivalent elements and any type of materials, shapes and dimensions can be used.

## Claims

1. Sorting process of journalistic articles according to website feeds; each of said feeds comprising at least some journalistic information including at least a text section; said sorting process comprising
- a computer unit comprising a journalistic database of said journalistic articles and a noise database comprising disturbance words;
- a server comprising said feeds; and
**- characterised in that** it comprises
- a reading step in which said computer unit is linked in data connection with said server, defines and reads at least one text section of at least some of said journalistic information present in each of said feeds;
- an identification step in which said computer unit extracts, from each of said at least one text sections read in said reading step, part of such text deprived of the disturbance words;
- a textual analysis step in which, from each of said textual parts of said journalistic information, said computer unit identifies strings and associates to each of said strings a weight in function of each of the positions adopted by said string within each of said text sections read; and
- a choosing step in which said computer unit classifies and chooses said journalistic articles based on a score which is a function of said weight and of the number of presences of said strings in said journalistic article.

2. Sorting process according to claim 1, wherein each of said feeds comprises a loading date of said journalistic information in said feeds; wherein, in said reading step, said computer unit defines, on the basis of said loading dates, a reading order of at least one piece of journalistic information; and wherein said weight is a function of at least said reading order.

3. Sorting process according to one or more of the preceding claims, wherein said at least one text section comprises a title; and wherein said at least one text section read in said reading step is said title.

4. Sorting process according to the previous claim, wherein said at least one text section comprises at least one out of a summary and a description; and wherein, in said reading step, said computer unit reads said title and at least one out of said summary and said description.

5. Sorting process according to the previous claim, wherein said weight of each of said strings is a function of the type of text section comprising said string.

6. Sorting process according to one or more of the previous claims, wherein said weight of each of said strings is a function of the length of the text section comprising said string.

7. Sorting process according to one or more of the previous claims, wherein said sorting process comprises a reboot step, after said choosing step, wherein the computer unit controls the starting of said sorting process recommencing from said reading step after a waiting time substantially equal to 20 minutes.

8. Sorting step according to one or more of the previous claims, wherein said feeds are chosen between RSS and Atom.
